# EUROPEAN PATENT SPECIFICATION

(11) **EP 0 490 635 B1**
(45) Date of publication and mention of the grant of the patent: **17.04.1996**
(21) Application number: 91311470.8
(22) Date of filing: 10.12.1991
(51) Int. Cl.: F16B 2/20, F16B 2/02, F16J 15/10, F02F 11/00

(54) **Clip for a gasket**
Klammer für einen Dichtungsring
Bride de fixation pour l'anneau joint

(30) Priority: 13.12.1990 JP 400547/90 U
(43) Date of publication of application: 17.06.1992
(73) Proprietor: ISHIKAWA GASKET CO. LTD., Tokyo (JP)
(72) Inventor: Miyaoh, Yoshio, c/o Ishikawa Gasket Co., Ltd., Tokyo (JP); Yamada, Yoshio, c/o Ishikawa Gasket Co., Ltd., Tokyo (JP); Inamura, Susumu, Tokyo (JP)
(74) Representative: Goddard, David John

(56) References cited:
- DD-A- 228 326
- FR-A- 2 594 186
- GB-A- 2 163 807

## Description

### Background of the Invention and Related Art Statement

The present invention relates to a clip for a gasket to be used when installing the gasket between engine parts, more particularly, the clip holding the gasket to one of the engine parts to easily locate the gasket between the engine parts.

A gasket is installed between two engine parts, such as between a cylinder head and a cylinder block, between a cylinder head and a manifold and so on, for sealing therebetween.

In case a gasket is installed between the cylinder head and the cylinder block, positioning pins are generally formed on the cylinder block, while the gasket is provided with positioning holes. The gasket can be properly positioned on the cylinder block by engaging the positioning holes of the gasket with the positioning pins on the cylinder block.

However, in case a manifold gasket is installed between the cylinder head and the manifold, there is no special positioning pins. Also, a gasket attaching surface of the cylinder head may not orient upwardly. Sometimes, the gasket attaching surface is oriented sidewardly or downwardly. In these cases, the manifold gasket can not be simply located on the cylinder head, or on the manifold. Therefore, when the manifold gasket is installed, the manifold gasket must be held by a person installing the manifold.

In case a space or angle for installing the manifold is limited, it is very difficult to hold the manifold gasket on the cylinder head or the manifold and to fasten the manifold to the cylinder head. In some cases, one person cannot install the manifold to the cylinder head by oneself.

As explained above, the cylinder block is provided with the positioning pins for aligning the gasket and the cylinder head. However, there is no means for attaching the gasket on one of the engine parts so that the gasket can be easily fixed to the engine part in case the gasket attaching portion orients sidewardly or downwardly or the gasket is moved together with the engine part for attachment.

FR-A-2 594 186 describes a clip device for connecting two members having holes or grid formations. However, the clip described is unsuitable for attaching a gasket to an engine part prior to assembly of the engine part to an engine.

Accordingly, one object of the invention is to provide a clip for a gasket, wherein the gasket can be attached to an appropriate portion on an engine part when installing the gasket between the engine parts.

Another object of the invention is to provide a clip as stated above, wherein the gasket can be securely attached to the engine part even if the engine part is moved.

A further object of the invention is to provide a clip as stated above, wherein the clip can be easily and economically manufactured.

A still further object of the invention is to provide a combination of a clip and a gasket for easily attaching the gasket to an appropriate portion on the engine part by means of the clip.

Further objects and advantages of the invention will be apparent from the following description of the invention.

### Summary of the Invention

According to the present invention there is provided a clip for attaching a gasket to a gasket attaching portion of an engine part, said clip being formed of a single metal plate and including a linear body, a projection formed at one end of the body, and an engaging portion formed at the other end of the body, said projection extending substantially perpendicularly from the body, said clip being characterized in that, said engaging portion extends substantially perpendicularly from the body in the same direction as the projection, said engaging portion including two parallel portions and a curved portion for connecting the parallel portions at a forward end thereof, said clip further including an operation portion extending outwardly from the engaging portion parallel to the body, said operating portion actuating to attach the clip to the gasket attaching portion.

The engaging portion is curved to provide resiliency thereat.

The clip is provided with an operation portion extending outwardly from the engaging portion parallel to the body. The clip can be attached to or detached from the gasket attaching portion by operating the operation portion.

The clip may be formed of a flexible plate with resiliency.

The clip of the invention can attach any type of a gasket to the gasket attaching portion of the engine part. When the gasket is properly held between the two engine parts, the clip may be left between the gasket and one of the engine parts. The clip may be removed from the gasket.

In case the gasket is formed of a resilient material, even if the projection of the clip is left on the gasket when tightened between the engine parts, the gasket can be compressed at the projection of the clip without affecting the sealing ability of the gasket. However, in case the gasket is formed of metal, it is preferable to form a notch or recess on or in the gasket, to which the projection of the clip is located, so that the gasket can be properly retained between the engine parts.

### Brief Description of the Drawings

Fig. 1 is a perspective view of a first embodiment of a clip of the invention;
Fig. 2 is a perspective view for showing one example of a manifold gasket to be fixed by the clip of the invention;
Fig. 3 is an explanatory perspective view for showing that the gasket of Fig. 2 is attached to a manifold by the clip of the invention;
Fig. 4 is a perspective view for showing another example of a manifold gasket to be fixed by the clip of the invention;
Fig. 5 is an explanatory perspective view for showing that the gasket of Fig. 4 is attached to the manifold by the clip of the invention;
Fig. 6 is a perspective view of a metal gasket having recesses for receiving the clip of the invention; and
Fig. 7 which is a perspective view of a second embodiment of the clip of the invention.

### Detailed Description of Preferred Embodiments

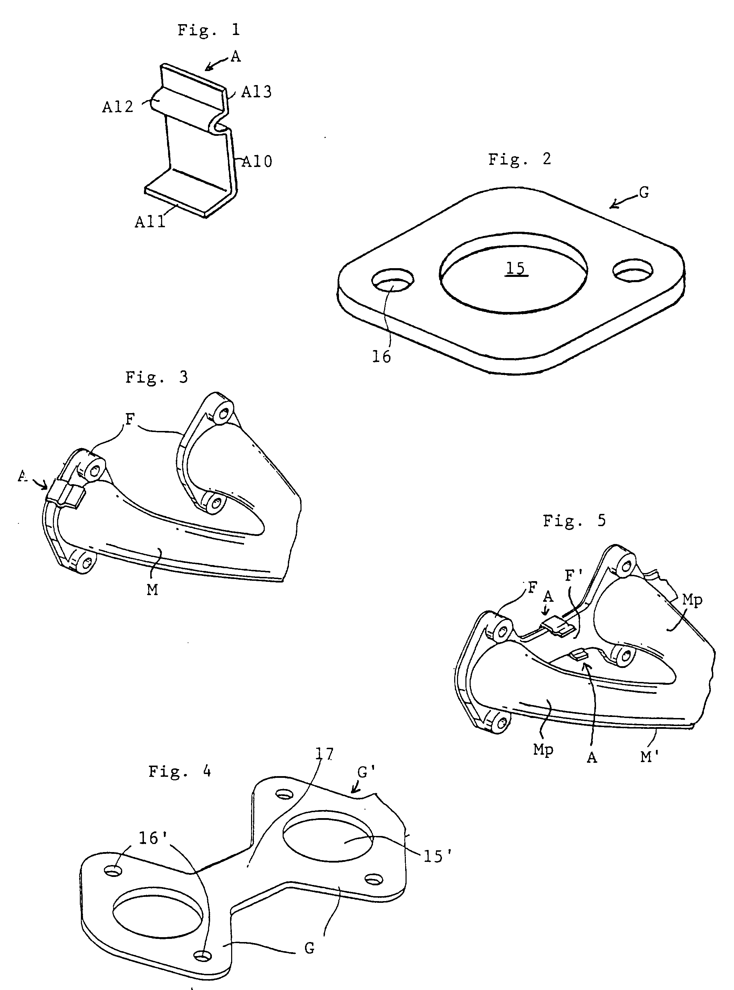

Referring to Fig. 1, a first embodiment A of a clip for a gasket formed in accordance with the present invention is shown. The clip A comprises a body portion A10 a projection All, an engaging portion A12 and an operation portion A13. The projection All extends substantially perpendicularly from one end of the body portion A10. Also, the engaging portion A12 extends substantially perpendicularly from the body portion A10. The engaging portion A12 extending from the body portion A10 is turned rearwardly, from which the operation portion A13 extends upwardly.

The clip A is formed of a metal plate, such as a soft steel plate and a spring material, to have resiliency. The thickness of the metal plate for the clip A is between 0.1 and 0.4 mm.

Since the clip A is made of the steel plate, the clip, especially the projection A11 and the engaging portion A12, has resiliency. Therefore, the clip can firmly attach a gasket to a gasket attaching portion of an engine part.

Fig. 2 shows an example of a gasket G to be held between a manifold M (Fig. 3) and a cylinder head (not shown). The gasket G has a shape similar to a flange F of the manifold M to be attached, and includes a central hole 15 and two bolt holes 16. The gasket G is made of inorganic fibers bonded together by a binder.

The clip A of the invention is used when the gasket G can not be stably placed on a gasket attaching portion of the cylinder head, such as the gasket attaching portion orienting sidewardly or downwardly. In this case, when the gasket G is installed between the manifold M and the cylinder head, the gasket G is at first attached to the flange F by the clips A (one clip is shown in Fig. 3).

When the gasket is attached to the manifold A, the projection A11 is located under the gasket G and the engaging portion A12 is located above the flange F by pushing the operation portion A13. It is preferable to use at least two clips to attach the gasket G to the flange F.

After the gasket G is attached to the manifold M by the clips A, even if the manifold M is oriented downwardly, the gasket G is not detached from the manifold M. Therefore, the manifold can be moved freely to engage with the cylinder head. After the manifold M with the gasket G and the cylinder head are aligned, the manifold M and the cylinder head are connected together by bolts (not shown). Since the gasket G is compressible, when the bolts are tightened, the projection A11 is pushed to enter into the gasket G. The projection A11 does not affect the sealing ability of the gasket G.

In the above embodiment, the clip A is not removed from the gasket. However, if desired, the clip A may be removed from the gasket before the bolts are firmly tightened.

As shown in Figs. 4 and 5, in case a manifold M' has flange connecting portions F' between manifold pipes Mp, the gaskets G for the manifold M' are connected together at connecting portions 17 to form a gasket assembly G'. When the gasket assembly G' is attached to the manifold M', the clips A are placed at the connecting portions F' and 17. As a result, the gasket assembly G' can be securely attached to the manifold M' without affecting to the sealing ability of the gasket and considering the thickness of the gasket G.

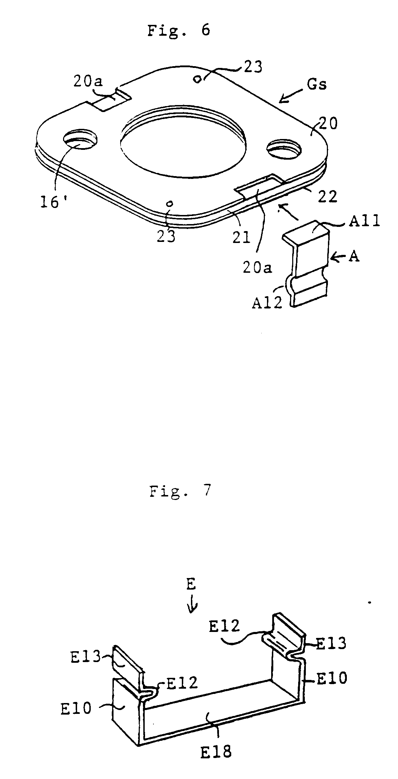

Fig. 6 shows a steel laminate gasket Gs to be installed between the manifold and the cylinder block by the clips A. The gasket Gs includes a central hole 15' and two bolt holes 16' as in the gasket G, and is formed of an upper plate 20 with two notches 20a, a middle plate 21 and a lower plate 22, which are connected together by spot welding 23.

When the gasket Gs is attached to the manifold M, the gasket Gs is arranged such that the upper plate 20 faces outwardly relative to the manifold M. Then, the projection All of each clip A is placed in the notch 20a, and the engaging portion A12 is engaged with the flange of the manifold M.

In the gasket Gs, the notches 20a are formed in the upper plate 20. However, recesses may be formed in the middle plate 21, into which the projection All may be inserted. Accordingly, the gasket with the recesses may be attached to the manifold by the clips.

Fig. 7 shows a second embodiment E of the clip of the present invention. The clip E is formed of a resilient metal plate and includes two sets of a body E10, an engaging portion E12 and an operation portion E13. A connecting portion E18 connects the body portions E10 together such that the engaging portions E12 face against each other.

The clip E is especially useful when attaching the gasket G' with the connecting portions 17 as shown in Fig. 4 to the flange connecting portions F' of the manifold M' (Fig. 5). In the clip E, therefore, the distance between the body portions E10 is selected to substantially have the same width as the connecting portion F' as shown in Fig. 5.

When installing the gasket on the manifold M', the clip E is pushed over the connecting portion F'. Accordingly, the connecting portion E18 holds the connecting portion 17 of the gasket and the engaging portions E12 engage the flange connecting portions F' of the manifold M'. The gasket can be easily installed on the manifold by the clip E.

In the present invention, the clip can firmly attach the gasket to one of the engine parts. Therefore, when the gasket is situated between the two engine parts, the gasket need not be supported by a user. Even if a gasket attaching portion is located in a troublesome place, the gasket can be easily installed between the engine parts.

While the invention has been explained with reference to the specific embodiments of the invention, the explanation is illustrative and the invention is limited only by the appended claims.

## Claims

1. A clip for attaching a gasket to a gasket attaching portion of an engine, said clip being formed of a single metal plate and including a linear body (A10), a projection (A11) formed at one end of the body, and an engaging portion (A12) formed at the other end of the body, said projection (A11) extending substantially perpendicularly from the body (A10), said clip being characterised in that,
said engaging portion (A12) extends substantially perpendicularly from the body (A10) in the same direction as the projection (A11), said engaging portion (A12) including two parallel portions and a curved portion for connecting the parallel portions at a forward end thereof,
said clip further including an operation portion (A13) extending outwardly from the engaging portion parallel to the body, said operating portion actuating to attach the clip to the gasket attaching portion.

2. A clip according to claim 1 characterised in that said clip is made of a flexible plate material having resiliency.

3. A clip according to claim 1 or claim 2 said clip being for use in attaching a gasket (G') to an engine part which includes a flange connecting portion (F') said clip being characterised by comprising two linear body portions (E10), two engaging portions (E12) and two operation portions (E13), each of said body portions, engaging portions and operation portions being joined by a common projection portion (E18), said engaging portions (E12) facing inwardly towards each other.

## Patentansprüche

1. Halter zum Anbringen einer Dichtung an einem Dichtungsanbringungsteil einer Maschine bzw. eines Triebwerks bzw. eines Motors, wobei der Halter aus einer einzigen Metallplatte ausgebildet ist und einen linearen Körper (A10), einen an einem Ende des Körpers ausgebildeten Vorsprung (All) und einen an dem anderen Ende des Körpers ausgebildeten Eingriffsteil (A12) umfaßt, wobei sich der Vorsprung (All) im wesentlichen senkrecht von dem Körper (A10) aus erstreckt, wobei der Halter dadurch **gekennzeichnet** ist, daß
sich der Eingriffsteil (A12) im wesentlichen senkrecht von dem Körper (A10) aus in der gleichen Richtung wie der Vorsprung (All) erstreckt, der Eingriffsteil (A12) zwei parallele Teile und einen gekrümmten Teil zum Verbinden der parallelen Teile an einem vorderen Ende davon umfaßt,
der Halter weiter einen Betätigungsteil (A13) umfaßt, welcher sich von dem Eingriffsteil parallel zu dem Körper nach auswärts erstreckt, wobei der Betätigungsteil zum Anbringen des Halters an dem Dichtungsanbringungsteil wirkt.

2. Halter gemäß Anspruch 1, dadurch **gekennzeichnet**, daß der Halter aus einem flexiblen Plattenmaterial hergestellt ist, das Elastizität bzw. Federkraft bzw. Rückstellkraft hat.

3. Halter gemäß Anspruch 1 oder Anspruch 2, wobei der Halter zur Verwendung beim Anbringen einer Dichtung (G') an einem Maschinen- bzw. Triebwerks- bzw. Motorteil ist, welches einen Flanschverbindungsteil (F') aufweist, wobei der Halter dadurch **gekennzeichnet** ist, daß er zwei lineare Körperteile (E10), zwei Eingriffsteile (E12) und zwei Betätigungsteile (E13) umfaßt, wobei jeder der Körperteile, Eingriffsteile und Betätigungsteile mittels eines gemeinsamen Vorsprungsteils (E18) verbunden ist, wobei die Eingriffsteile (E12) einwärts aufeinander zu gewandt sind.

## Revendications

1. Bride de fixation pour fixer un joint sur une partie de fixation de joint d'un moteur, ladite bride de fixation étant faite d'une seule plaque métallique et comprenant un corps linéaire (A10), une saillie (A11) formée à une extrémité du corps, et une partie d'engagement (A12) formée à l'autre extrémité du corps, ladite saillie (A11) s'étendant sensiblement perpendiculairement à partir du corps (A10), ladite bride de fixation étant caractérisée en ce que
ladite partie d'engagement (A12) s'étend sensiblement perpendiculairement à partir du corps (A10) dans la même direction que la saillie (A11), ladite partie d'engagement (A12) comprenant deux parties parallèles et une partie courbe servant à relier les parties parallèles au niveau de leurs extrémités avant,
ladite bride de fixation comprenant en outre une partie d'actionnement (A13), qui s'étend vers l'extérieur à partir de la partie d'engagement, parallèlement au corps, ladite partie d'actionnement servant à fixer la bride sur la partie de fixation de joint.

2. Bride de fixation selon la revendication 1, caractérisée en ce que ladite bride de fixation est faite d'un matériau souple en plaque, ayant une certaine élasticité.

3. Bride de fixation selon la revendication 1 ou la revendication 2, ladite bride de fixation étant destinée à servir à la fixation d'un joint (G') sur un élément de moteur, qui comprend une partie de liaison de collerettes (F'), ladite bride de fixation étant caractérisée en ce qu'elle comprend deux parties corps linéaires (E10), deux parties d'engagement (E12) et deux parties d'actionnement (E13), chacune desdites parties corps, parties d'engagement et parties d'actionnement étant reliée par une partie saillie commune (E18), lesdites parties d'engagement (E12) étant tournées vers l'intérieur en face l'une de l'autre.
